# EUROPÄISCHE PATENTSCHRIFT

(11) **EP 1 035 737 B1**
(45) Veröffentlichungstag und Bekanntmachung des Hinweises auf die Patenterteilung: **16.04.2008**
(21) Anmeldenummer: 00103864.5
(22) Anmeldetag: 24.02.2000
(51) Int. Cl.: H04Q 3/00, H04M 3/523

(54) **Fernmelde-Vermittlungssystem und Betriebsverfahren dafür**
Telecommunication switching system and its operating method
Central de télécommunication et sa méthode de fonctionnement

(30) Priorität: 09.03.1999 DE 19910195
(43) Veröffentlichungstag der Anmeldung: 13.09.2000
(73) Patentinhaber: Tenovis GmbH & Co. KG, 60362 Frankfurt am Main (DE)
(72) Erfinder: Sprotte, Ralf, 74321 Bietigheim-Bissingen (DE); Halfmann, Joerg, 68163 Mannheim (DE); Haack, Reiner, High Prairie, AB, TOG 1EO (CA)
(74) Vertreter: Tergau & Pohl Patentanwälte

(56) Entgegenhaltungen:
- EP-A- 0 765 065
- WO-A-98/25386
- US-A- 5 390 243

## Beschreibung

Die Erfindung betrifft ein Fernmelde-Vermittlungssystem für ein Callcenter und ein Betriebsverfahren dafür. Eine Telefonanlage eines Callcenters umfaßt üblicherweise eine Vermittlungszentrale, die über ein oder mehrere Eingangsleitungen, insbesondere Amtsleitungen, angerufen werden kann, und an die eine Vielzahl von Endgeräten, insbesondere Telefonen angeschlossen ist. Alle diese Telefone sind über eine gemeinsame Rufnummer zu erreichen. Ein Anruf, der durch Wählen dieser gemeinsamen Rufnummer die Vermittlungszentrale erreicht, wird von dieser an eine Anrufverteilereinheit weitergemeldet, die nach vorgegebenen Kriterien den eintreffenden Anruf einem der Endgeräte zuordnet, zu dem dann eine Verbindung hergestellt wird. Dem Anrufer selbst bleibt der Zuordnungsvorgang verborgen.

Herkömmliche Callcenter sind interessant für Unternehmen, die an guter telefonischer Erreichbarkeit für einen Dienst interessiert sind, der wenig Beratungsbedarf mit sich bringt oder bei dem zumindest kein Bedarf nach wiederholten Gesprächen zwischen einem Kunden und einem Berater in dem Callcenter erforderlich ist. Dies ist zum Beispiel der Fall bei der telefonischen Aufnahme von Bestellungen für ein Versandgeschäft.

Dienstleistungen, bei denen Bedarf nach wiederholten Gesprächen eines Kunden mit dem gleichen Berater erforderlich sind, lassen sich mit einem herkömmlichen Callcenter nicht befriedigend abwickeln.

Neue digitale Fernmeldetechniken wie etwa ISDN, die die Übertragung einer Identität des Anrufers in Form seiner Rufnummer gestatten, erlauben eine Weiterentwicklung dieser Systeme. So ist es zum Beispiel anhand der Identität eines Anrufers möglich, in einer Datenbank zu ermitteln, mit welchem Berater des Callcenters der Anrufer zuletzt gesprochen hat, und ihn, falls dieser verfügbar ist, erneut mit ihm zu verbinden.

Auch die Tätigkeit des Beraters kann dadurch erleichtert werden, daß den Anrufer betreffende Daten aus der Datenbank direkt an seinen Arbeitsplatz übermittelt werden, sei es durch Übermitteln an sein Telefon mit Hilfe des Fernmelde-Vermittlungssystems, oder durch Übertragung von Daten beispielsweise auf ein Computerterminal am Arbeitsplatz des Beraters. Diese Vorteile werden allerdings mit der erhöhten Störanfälligkeit des Fernmelde-Vermittlungssystems erkauft. Störungen des Computersystems, auf dem die Anrufverteilereinheit basiert, können deren Funktion in Mitleidenschaft ziehen. Wenn aber die Anrufverteilereinheit ausfällt, ist eine ordnungsgemäße Weitervermittlung eintreffender Anrufe nicht mehr möglich, und der gesamte Geschäftsbetrieb eines Callcenters kommt zum Erliegen. Ein solches Risiko ist für den Betreiber eines Callcenters nicht tragbar. Der Hersteller eines Vermittlungssystems für ein Callcenter muß daher in der Lage sein, derartige Pannen mit Sicherheit auszuschließen. Dies ließe sich möglicherweise erreichen, wenn die computergestützte Anrufverteilereinheit auf einem eigenständigen, nur zu diesem Zweck eingesetzten Computer implementiert würde. Dies würde aber für den Betreiber zu unerwünschten Mehrkosten sowohl bei der Anschaffung des Vermittlungssystems als auch bei dessen laufender Wartung führen, weil neben einer eventuell bereits vorhandenen Kundendatenbank eine zweite speziell für das Vermittlungssystem eingerichtet und auf aktuellem Stand gehalten werden müßte.

Ein anderes Beispiel ist aus EP 0 765 065 bekannt.

Mit dem erfindungsgemäßen Fernmelde-Vermittlungssystem nach Anspruch 1 werden diese Probleme vermieden, und es wird ein Vermittlungssystem geschaffen, dass in der Lage ist, einen unterbrechungsfreien Betrieb zu gewährleisten, auch wenn eine Störung der computergestützten Anrufverteilereinheit auftreten sollte. Dabei verfügt das Vermittlungssystem über eine Uhr zum Messen der Zeit, die die Anrufverteilereinheit benötigt, um einen eintreffenden Anruf ein Endgerät zuzuordnen, das den Anruf entgegennehmen soll. Falls dies Zuordnung nicht innerhalb einer vorgegebenen Zeit erfolgt, sieht das Vermittlungssystem die Anruferverteilereinheit als gestört an.

Zweckmäßigerweise verwenden Anrufverteilereinheit und Hilfsverteilereinheit die gleiche Signalisierung, um mit der Vermittlungszentrale zu kommunizieren.

Gemäß einem zweiten Aspekt der Erfindung ist bei einem Verfahren zum Betreiben eines Fernmelde-Vermittlungssystems, bei dem eine Vermittlungszentrale des Vermittlungssystems einen eintreffenden Anruf einer Anrufverteilereinheit signalisiert und nach Erhalt einer Zuordnungsmeldung von der Anrufverteilereinheit den Anrufer mit einem in der Zuordnungsmeldung spezifizierten Engeräte verbindet, nach der Erfindung vorgesehen, daß die Vermittlungszentrale, wenn sie die Zuordnungsmeldung nach einer vorgegebenen Dauer nicht erhalten hat, den Anruf einer Hilfsverteilereinheit signalisiert und mit einem in einer von der Hilfsverteilereinheit erhaltenen Zuordnungsmeldung spezifizierten Endgerät verbindet.

Bei einer einfachen Variante dieses Verfahrens kann jeder zu verteilende Anruf zuerst der Anrufverteilereinheit signalisiert werden. Auf diese Weise erfolgt, sobald eine Störung der Anrufverteilereinheit behoben worden ist, die Anrufverteilung sofort wieder über diese, und sämtliche Komfortfunktionen der Anrufverteilereinheit wie zum Beispiel Bereitstellung von Daten über den Anrufer oder Vermitteln des Anrufers an einen Berater, mit dem er zuvor gesprochen hat, stehen wieder zur Verfügung. Allerdings muß hierfür, solange die Störung anhält, für die Vermittlung jedes Anrufs eine Wartezeit in Kauf genommen werden, die der vorgegebenen Dauer entspricht, die die Vermittlungszentrale abwartet, bevor sie einen Anruf der Hilfsverteilereinheit signalisiert.

Eine schnelle Vermittlung im Störungsfall ist hingegen gewährleistet, wenn die Vermittlungszentrale, nachdem sie einmal die Zuordnungsmeldung von der Anrufverteilereinheit nach der vorgegebenen Dauer nicht erhalten hat, nachfolgende zu verteilende Anrufe sofort der Hilfsverteilereinheit signalisiert. Dabei kann eine feste Zeitspanne oder eine Zahl von Anrufen vorgegeben werden, nach der die Vermittlungszentrale erneut einen Versuch unternimmt, einen Anruf von der Anrufverteilereinheit verteilen zu lassen; es kann aber auch vorgesehen werden, daß ein eintreffender Anruf erst dann wieder der Anrufverteilereinheit signalisiert wird, wenn die Vermittlungszentrale, zum Beispiel durch eine Eingabe einer Bedienungsperson, die Information erhalten hat, daß die Störung der Anrufverteilereinheit behoben ist.

Figuren
- Figur 1: zeigt schematisch ein erfindungsgemäßes Fernmelde-Vermittlungssystem.
- Figur 2: zeigt schematisch die Struktur einer Vermittlungszentrale des Fernmelde-Vermittlungssystems.

### Beschreibung von Ausführungsbeispielen

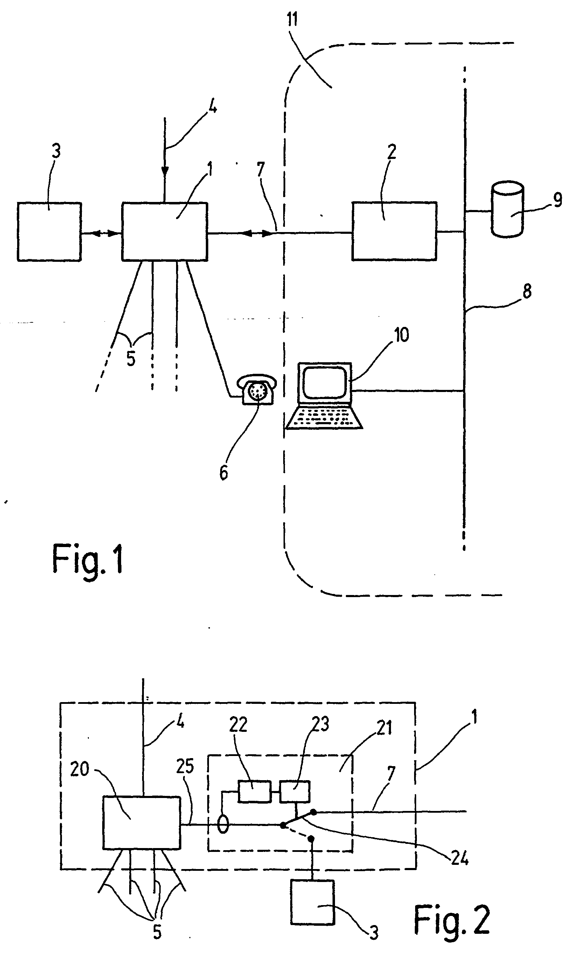

Die Figur 1 zeigt ein Blockdiagramm eines erfindungesgemäßen Fernmelde-Vermittlungssystems. Es umfaßt eine Vermittlungszentrale 1, die über ein oder mehrere Amtsleitungen 4 mit einem öffentlichen Fernmeldenetz verbunden ist. Die Amtsleitungen 4 dienen als Eingangsleitungen für ankommende Anrufe. Eine Mehrzahl von Telefonen 6 sind über interne Leitungen 5 an die Vermittlungszentrale 1 angeschlossen. Diese Telefone 6 können eigene Durchwahlnummern haben, mit denen sie über eine der Amtsleitungen 4 von außen angewählt werden können. Die Vermittlungszentrale 1 verfügt über wenigstens eine Rufnummer, die keinem der angeschlossenen Telefone 6 eindeutig zugeordnet ist, und die eine allgemeine Rufnummer des Callcenters darstellt. Anrufe, die diese Nummer wählen, werden von der Vermittlungszentrale 1 als zu verteilende Anrufe erkannt.

Wenn das Vermittlungssystem normal arbeitet, werden solche Anrufe einer Anrufverteilereinheit 2 über eine Leitung 7 signalisiert.

Die Anrufverteilereinheit 2 ist in ein Computernetzwerk 11 integriert, sie kann, wie in der Figur dargestellt, ein eigenständiger Prozessor sein, sie kann aber auch in Form von Software implementiert sein, die zeitanteilig von einem Prozessor abgearbeitet wird, der nebenher noch weitere Aufgaben innerhalb des Computernetzwerks versieht. Die Anrufverteilereinheit 2 ist über einen Bus 8 in der Lage, Daten mit einem Massenspeicher 9 und mit einer Mehrzahl von Arbeitsplatz-Terminals oder Arbeitsplatzrechnern 10 des Netzwerks 11 auszutauschen.

Wenn der Anrufverteilereinheit 2 ein eintreffender Anruf signalisiert wird, so überprüft diese zunächst, ob die Signalisierung eine Angabe über die Identität des Anrufers, insbesondere dessen Rufnummer, beinhaltet. Wenn dies nicht der Fall ist, wendet die Anrufverteilereinheit 2 ein einfaches Verteilungsverfahren an, bei dem eine zum betreffenden Zeitpunkt nicht belegte interne Leitung 5 ausgewählt und deren Nummer der Vermittlungszentrale 1 über die Leitung 7 zurück signalisiert wird, um diese zu veranlassen, den eintreffenden Anruf auf die entsprechende interne Leitung 5 zu legen. Diese Auswahl kann zum Beispiel rein zufällig erfolgen, es kann aber auch zum Beispiel vorgesehen werden, daß die Vermittlungszentrale einen eintreffenden Anruf derjenigen verfügbaren internen Leitung 5 zuordnet, die die längste Zeit keinen Anruf erhalten hat, um so eine in etwa gleiche Arbeitsbelastung aller Mitarbeiter zu gewährleisten.

Wenn der Anruferverteilereinheit 2 über die Leitung 7 die Rufnummer des Anrufers signalisiert worden ist, führt sie ein erweitertes Verteilungsverfahren aus. Dabei greift sie zunächst auf eine in dem Massenspeicher 9 abgelegte Datenbank zu, die Daten des Callcenterbetreibers über seine Kunden enthält. Diese Datenbank kann neben üblichen Eintragungen wie Name, Rufnummer und Adresse des Kunden zum Beispiel auch Information wie die Durchwahl eines oder mehrerer Berater des Kunden in dem Callcenter, laufende Aufträge des Kunden und deren Bearbeitungsstand, bereits abgewickelte Aufträge, eventuelle Guthaben oder offene Rechnungen des Kunden usw. enthalten. Wenn die Anrufverteilereinheit 2 einen solchen Anruf verteilt, überprüft sie zunächst, ob die interne Leitung 5 des Beraters oder einer der Berater des Kunden verfügbar ist, und wenn dies der Fall ist, legt sie das Gespräch auf eine dieser Leitungen, indem sie der Vermittlungszentrale 1 eine entsprechende Zuordnungsmeldung auf der Leitung 7 sendet. Falls keiner der Berater verfügbar ist, ordnet sie dem Anruf eine interne Leitung 5 nach dem bereits beschriebenen einfachen Verfahren zu und speichert die zugehörige Durchwahlnummer oder den Namen des Beraters, der an dem Telefon mit der entsprechenden Nummer arbeitet, im Datensatz des betreffenden Kunden. Das gleiche geschieht, falls der Anrufverteilereinheit 2 ein Anruf mit Angabe der Rufnummer des Anrufers signalisiert wird, diesem aber in der Datenbank kein Berater zugeordnet ist.

Gleichzeitig mit der Zuordnung des Anrufs zu einer der internen Leitungen 5 veranlaßt die Anrufverteilereinheit 2 die Übermittlung von den Kunden betreffenden Daten aus der Datenbank an den Beraterarbeitsplatz, zu dem das zugehörige Telefon 6 gehört. Dies erfolgt vorzugsweise durch Übersenden der Daten des betreffenden Kunden an einen Arbeitsplatzrechner 10, der am gleichen Arbeitsplatz aufgestellt ist wie das für die Beantwortung des Anrufs ausgewählte Telefon 6. Somit stehen dem an diesem Arbeitsplatz tätigen Berater die Informationen über den Kunden bereits zur Verfügung, während er den Anruf entgegennimmt, und müssen nicht erst zum Beispiel durch manuelle Eingabe des Namens des Kunden in den Arbeitsplatzrechner 10 abgefragt werden.

Wenn der Datensatz eines Kunden von geringem Umfang ist, besteht die Möglichkeit, ihn von der Anrufverteilereinheit 2 über die Vermittlungszentrale 1 an ein Display des Telefons 6 zu übermitteln, so daß in einem solchen auf einen Arbeitsplatzrechner 10 verzichtet werden könnte.

Im Falle einer Störung des Rechnernetzes ist die Wahrscheinlichkeit groß, daß auch der Betrieb der Anrufverteilereinheit 2 beeinträchtigt ist, und daß diese einem eintreffenden Anruf keine interne Leitung 5 mehr zuordnen kann, sei es, weil der Rechner steht, auf dem die Anrufverteilereinheit 2 implementiert ist, weil infolge einer Busstörung ein Zugriff auf den Massenspeicher 9 nicht mehr möglich ist, oder aus anderen Gründen. Für diesen Fall ist in der Vermittlungszentrale 1 eine Stoppuhr vorgesehen, die jedes Mal in Gang gesetzt wird, wenn die Vermittlungszentrale 1 der Anrufverteilereinheit 2 einen zu verteilenden Anruf signalisiert, und die die Zeit mißt, die bis zum Eintreffen einer Zuordnungsmeldung von der Anrufverteilereinheit 7 mißt. Diese Uhr kann zum Beispiel in herkömmlicher Weise als Schwingkreis in Kombination mit einer Zählschaltung realisiert sein. Wenn diese Zeit größer ist als ein vorgegebener Grenzwert von beispielsweise drei Sekunden, sieht die Vermittlungszentrale 1 die von der Verteilereinheit 2 als gestört an. In diesem Fall wird der eintreffende Anruf einer Hilfsverteilereinheit 3 signalisiert, die das oben beschriebene einfache Verteilungsverfahren durchführt. Die Hilfsverteilereinheit 3 ist vom Rechnernetz vollständig getrennt; sie tauscht Daten lediglich mit der Vermittlungszentrale 1 aus. Infolgedessen kann sie von Störungen des Rechnernetzwerks nicht in Mitleidenschaft gezogen werden; sie ist auch bei einem völligen Ausfall des Netzwerks noch verfügbar. Auf diese Weise ist die jederzeitige Erreichbarkeit des Callcenters sichergestellt.

Figur 2 zeigt einen bevorzugten Aufbau einer Vermittlungszentrale 1 des Fernmelde-Vermittlungssystems. Ihre wesentlichen Bestandteile sind eine Vermittlungszentrale 20, die eine beliebige Vermittlungszentrale nach dem Stand der Technik sein kann, die einen einzigen Anschluß für eine Leitung 25 zum Kommunizieren mit einer Anrufverteilereinheit aufweist. Die Vermittlungszentrale 20 braucht also in keiner Weise an den gleichzeitigen Betrieb mit einer Anrufverteilereinheit und einer Hilfsverteilereinheit angepaßt zu sein. Diese Leitung 25 durchläuft eine Verteilerschalteinheit 21, die die bereits erwähnte Uhr 22 enthält. Die Uhr ist in der Lage, den Datenverkehr auf der Leitung 25 zu überwachen und die Zeit zwischen der Übermittlung einer Verteilungsanforderung von der herkömmlichen Vermittlungszentrale 20 an die Anrufverteilereinheit 2 und dem Eintreffen einer Zuordnungsmeldung von der Anrufverteilereinheit 2 zu messen. Wenn diese Zeit eine festgelegte Dauer überschreitet, schaltet eine Steuerschaltung 23 einen Schalter 24 um und ersetzt so die Verbindung zwischen der herkömmlichen Vermittlungszentrale 20 und der Anrufverteilereinheit 2 durch eine Verbindung zur Hilfsverteilereinheit 3. Da Anrufverteilereinheit 2 und Hilfsverteilereinheit 3 die gleiche Signalisierung verwenden, ist eine Anpassung der herkömmlichen Vermittlungszentrale 20 für die Zusammenarbeit mit der Hilfsverteilereinheit 3 nicht erforderlich. Die Verteilerschalteinheit 21 kann deshalb als eigenständige Baugruppe in einem beliebigen existierenden Fernmelde-Vermittlungssystem nachgerüstet werden. Die Hilfsverteilereinheit 3 kann in dieser Baugruppe mit enthalten sein.

Eine Rückumschaltung des Schalters 24 und damit eine Wiederherstellung der Verbindung zwischen der herkömmlichen Vermittlungszentrale 20 und der Anrufverteilereinheit 2 kann in unterschiedlicher Weise erfolgen.

Nach einer ersten Alternative kann die Steuerschaltung 23 die Verbindung jedesmal nach Eintreffen einer Zuordnungsmeldung von der Hilfsverteilereinheit 3 wiederherstellen. In diesem Fall wird bei jedem Eintreffen eines zu verteilenden Anrufs dieser zuerst der Anrufverteilereinheit 2 signalisiert, und, falls diese wieder betriebsbereit ist, von ihr verteilt. Alternativ kann die Steuerschaltung eingerichtet sein, um die Verbindung erst nach einer vorgegebenen Verzögerung wiederherzustellen. Eine dritte Alternative ist, daß die Steuerschaltung 23 die Rückumschaltung nicht selbsttätig vornimmt und daß stattdessen ein Bedienelement an der Verteilerschalteinheit vorgesehen ist, mit dem ein Benutzer die Verbindung wiederherstellen kann.

Die drei Alternativen sind auch sinnvoll kombinierbar, zum Beispiel in der Weise, daß die Steuerschaltung bei einer gewissen Zahl von Anrufen nach der ersten Alternative vorgeht und, falls die Zuordnungsmeldung der Anrufverteilereinheit 2 immer nicht rechtzeitig kommt, auf die zweite oder dritte Alternative wechselt.

## Patentansprüche

1. Fernmelde-Vermittlungssystem mit einer Vermittlungszentrale (1), an die wenigstens eine Eingangsleitung (4) und eine Mehrzahl von Endgeräten (6) über interne Leitungen (5) angeschlossen sind, und einer computergestützten Anrufverteilereinheit (2), die dazu dient, einem auf einer der Eingangsleitungen (4) eintreffenden Anruf eines der intern angeschlossenen Endgeräte (6) zuzuordnen, wobei die Vermittlungszentrale Mittel zum Erfassen einer Störung der Anrufverteilereinheit (2) und eine Hilfsverteilereinheit (3) umfasst, welche dem eintreffenden Anruf ein Endgerät (6) zuordnet, wenn eine Störung der Anrufverteilereinheit (2) erfasst wird, **dadurch gekennzeichnet, dass**
die Vermittlungszentrale (1) über eine Uhr (22) zum Messen der Zeit verfügt, die die Anrufverteilereinheit (2) benötigt, um dem eintreffenden Anruf ein Endgerät (6) zuzuordnen, und eine Störung der Anrufverteilereinheit (2) erfasst, wenn die gemessene Zeit eine vorgegebene Dauer überschreitet

2. Vermittlungssystem nach Anspruch 1, **dadurch gekennzeichnet, dass** Anrufverteilereinheit (2) und Hilfsverteilereinheit (3) die gleiche Signalisierung anwenden.

3. Vermittlungssystem nach einem der vorhergehenden Ansprüche, **dadurch gekennzeichnet, dass**
die Vermittlungszentrale (1) Mittel zum Übermitteln der Identität eines Anrufers an die computergestützte Anrufverteilereinheit (2) umfasst, und dass der Anrufverteilereinheit (2) ein Massenspeicher (9) mit Daten potentieller Anrufer zugeordnet ist.

4. Verfahren zum Betreiben eines Femmelde-Verrmittlungssystems, insbesondere nach einem der vorhergehenden Ansprüche, bei dem eine Vermittlungszentrale (1) des Vermittlungssystems einen eintreffenden Anruf einer Anruf verteilereinheit (2) signalisiert und nach Erhalte einer Zuordnungsmeldung von der Anrufverteilereinheit (2) den Anruf mit einem in der Zuordnungsmeldung spezifizierten Endgerät (6) verbindet, **dadurch gekennzeichnet, dass**
die Vermittlungszentrale (1), wenn sie die Zuordnungsmeldung nach einer vorgegebenen Dauer nicht erhalten hat, den Anruf einer Hilfsverteilereinheit (3) signalisiert und mit einem in einer von der Hilfsverteilereinheit (3) erhaltenen Zuordnungsmeldung spezifizierten Endgerät (6) verbindet.

5. Verfahren nach Anspruch 4, **dadurch gekennzeichnet, dass**
jeder zu verteilende Anruf zuerst der Anrufverteilereinheit (2) signalisiert wird.

6. Verfahren nach Anspruch 4, **dadurch gekennzeichnet, dass**
die Vermittlungszentrale (1), wenn sie die Zuordnungsmeldung nach einer vorgegebenen Dauer nicht erhalten hat, nachfolgende zu verteilende Anrufe sofort der Hilfsverteilereinheit (3) signalisiert.

7. Verfahren nach einem der Ansprüche 4 bis 6, **dadurch gekennzeichnet, dass** die Anrufverteilereinheit (2) anhand einer ihr von der Vermittlungszentrale (1) signalisierten Identität des Anrufers Daten des Anrufers aus einer Datenbank ermittelt.

8. Verfahren nach Anspruch 7, **dadurch gekennzeichnet, dass**
die Anrufverteilereinheit (2) in der Datenbank ermittelte Daten bei der Zuordnung des Anrufers zu einem Endgerät berücksichtigt.

9. Verfahren nach Anspruch 7 oder 8, **dadurch gekennzeichnet, dass**
die Anrufverteilereinheit (2) die Übertragung von in der Datenbank ermittelten Daten an ein Endgerät (6; 10) veranlaßt.

## Claims

1. Telecommunication switching system comprising a switching center (1) to which at least one input line (4) and a plurality of terminals (6) are connected through internal lines (5), and a computer-aided call-distributor unit (2) serving for allocating one of the internally connected terminals (6) to a call coming in on one of the input lines (4), the switching center comprising means for detecting a disturbance of the call-distributor unit (2), as well as an auxiliary distributor unit (3) which allocates a terminal (6) to the incoming call when a disturbance of the call-distributor unit (2) is detected, **characterized in that**
the switching center (1) is provided with a clock (22) for measuring the time needed by the call-distributor unit (2) to allocate a terminal (6) to the incoming call, and detects a disturbance of the call-distributor unit (2) if the time measured exceeds a specified value.

2. Switching system according to claim 1, **characterized in that**
the call-distributor unit (2) and the auxiliary distributor unit (3) use the same signaling system.

3. Switching system according to any of the preceding claims, **characterized in that**
the switching system (1) comprises means for transmitting the caller's identity to the computer-aided call-distributor unit (2) and that a mass storage (9) with data of potential callers is allocated to the call-distributor unit (2).

4. Method for operating a telecommunication switching system, in particular a system according to any of the preceding claims, wherein a switching center (1) of the switching system signals an incoming call to a call-distributor unit (2) and after receipt of an allocation message from the call-distributor unit (2) connects the call with a terminal (6) specified in the allocation message, **characterized in that**
the switching center (1), if it does not receive the allocation message within a specified time, signals the call to an auxiliary distributor unit (3) and connects it with a terminal (6) specified in an allocation message of the auxiliary distributor unit (3).

5. Method according to claim 4, **characterized in that**
each call to be distributed is first signaled to the call-distributor unit (2).

6. Method according to claim 4, **characterized in that**
the switching center (1), if it does not receive the allocation message within a specified time, signals any following calls to be distributed immediately to the auxiliary distributor unit (3).

7. Method according to any of claims 4 to 6, **characterized in that**
the call-distributor unit (2) determines, by means of the caller's identity signaled to it by the switching center (1), data of the caller from a database.

8. Method according to claim 7, **characterized in that**
the call-distributor unit (2) takes into account the data determined from the database when allocating the caller to a terminal.

9. Method according to claim 7 or 8, **characterized in that**
the call-distributor unit (2) causes the transmission of the data determined from the database to a terminal (6; 10).

## Revendications

1. Système de commutation de télécommunication comprenant un centre de commutation (1) auquel au moins une ligne d'entrée (4) et une pluralité de terminaux (6) sont connectée par des lignes internes (5), et une unité de distribution d'appels (2) assistée par ordinateur servant à affecter l'un des terminaux (6) connectés internement à un appel arrivant sur l'une des lignes d'entrée (4), le centre de commutation comprenant des moyens pour détecter une perturbation de l'unité de distribution d'appels (2), ainsi qu'une unité de distribution auxiliaire (3) qui affecte un terminal (6) à l'appel arrivant quand une perturbation de l'unité de distribution d'appels (2) est détectée, **caractérisé en ce que**
le centre de commutation (1) est muni d'un chronomètre (22) pour mesurer le temps que prend l'unité de distribution d'appels (2) pour affecter un terminal (6) à l'appel arrivant, et détecte une perturbation de l'unité de distribution d'appels (2) si le temps mesuré excède une valeur spécifiée.

2. Système de commutation selon la revendication 1, **caractérisé en ce que** l'unité de distribution d'appels (2) et l'unité de distribution auxiliaire (3) utilisent le même système de signalisation.

3. Système de commutation selon l'une quelconque des revendications précédentes, **caractérisé en ce que**
le système de commutation (1) comprend des moyens pour transmettre l'identité de celui qui appelle, à l'unité de distribution d'appels (2) assistée par ordinateur et **en ce qu'**une mémoire de masse (9) avec des données d'une potentielle personne qui appelle est affectée à l'unité de distribution d'appels (2).

4. Procédé pour faire fonctionner un système de commutation de télécommunication, en particulier un système selon l'une quelconque des revendications précédentes, dans lequel un centre de commutation (1) du système de commutation signale un appel arrivant à l'unité de distribution d'appels (2) et après réception d'un message d'affectation de l'unité de distribution d'appels (2) connecte l'appel avec un terminal (6) spécifié dans le message d'affectation,
**caractérisé en ce que**
le centre de commutation (1), s'il ne reçoit pas le message d'affectation dans un temps spécifié, signale l'appel à une unité de distribution auxiliaire (3) et le connecte avec un terminal (6) spécifié dans un message d'affectation de l'unité de distribution auxiliaire (3).

5. Procédé selon la revendication 4, **caractérisé en ce que**
chaque appel est d'abord signalé à l'unité de distribution d'appels (2).

6. Procédé selon la revendication 4, **caractérisé en ce que**
le centre de commutation (1), s'il ne reçoit pas les message d'affectation dans un temps spécifié, signale les appels suivants à distribuer immédiatement à l'unité de distribution auxiliaire (3).

7. Procédé selon l'une des revendications 4 à 6, **caractérisé en ce que**
l'unité de distribution d'appels (2) détermine, au moyen de l'identité de celui qui appelle, signalée à elle par le centre de commutation (1), des données de celui qui appelle, dans une base de données.

8. Procédé selon la revendication 7, **caractérisé en ce que**
l'unité de distribution d'appels (2) tient compte des données déterminées dans la base de données lorsqu'elle affecte la personne qui appelle à un terminal.

9. Procédé selon la revendication 7 or 8, **caractérisé en ce que**
l'unité de distribution d'appels (2) cause la transmission des données déterminées dans la base de données, à un terminal (6; 10).
